# EUROPÄISCHE PATENTSCHRIFT

(11) **EP 0 744 602 B1**
(45) Veröffentlichungstag und Bekanntmachung des Hinweises auf die Patenterteilung: **10.07.2002**
(21) Anmeldenummer: 95810349.1
(22) Anmeldetag: 24.05.1995
(51) Int. Cl.: G01L 5/04, G01L 5/10

(54) **Sensor und Vorrichtung mit Sensor zum Detektieren einer Fadenspannung**
Sensor and device with sensor for detecting a yarn tension
Capteur et dispositif avec capteur pour détecter une tension de fil

(43) Veröffentlichungstag der Anmeldung: 27.11.1996
(73) Patentinhaber: Sulzer Textil AG, 8630 Rüti (CH)
(72) Erfinder: De Jager, Godert, Dr., CH-8121 Benglen (CH); Lehnert, Frank, Dr., CH-8630 Rüti (CH); Benz, Rolf, CH-8547 Gachnang (CH)
(74) Vertreter: Sulzer Management AG

(56) Entgegenhaltungen:
- DE-A- 4 305 795
- US-A- 4 976 158
- PATENT ABSTRACTS OF JAPAN vol. 8 no. 269 (P-319) ,8.Dezember 1984 & JP-A-59 137834 (MARUMUNE KOGYO KK) 8.August 1984,

## Beschreibung

Die Erfindung betrifft einen Sensor zum Detektieren einer Fadenspannung gemäss dem Oberbegriff des Anspruches 1 und eine Vorrichtung mit einem Sensor sowie eine Webmaschine mit einer solchen Vorrichtung.

Aus der DE-A- 43 05 795 ist eine Messeinrichtung bekannt, mit der eine Fadenspannung mittels einem verformbaren und als Fadenführungsorgan ausgebildeten Hohlzylinder detektierbar ist.

Der Erfindung liegt die Aufgabe zugrunde, einen Sensor zum Detektieren des Spannungsverlaufes eines bewegten Fadens zu schaffen, bei welchem die Uebertragung der auf das Fadenführungsorgan einwirkenden Kraft wesentlich verbessert und der Einfluss der Erwärmung weitgehend aufgehoben ist.

Diese Aufgabe wird erfindungsgemäss mit den kennzeichnenden Merkmalen des Anspruches 1 gelöst.

Als vorteilhaft erweist sich bei dieser Erfindung die kostengünstige Ausführung und die Vielfalt der Einsatzmöglichkeiten.

Eine Vorrichtung mit einem Sensor ist durch die Merkmale des Anspruches 10 gekennzeichnet. Durch die Zuordnung von Führungselemente zum Führungsorgan des Sensors kann in vorteilhafter Weise die Richtung der auf den Signalgeber übertragenen Kraft eingestellt werden. Durch die elastische, schwingungsdämpfende und freitragende Lagerung des Sensors kann die durch mechanische Einwirkung, als auch durch Wärme verursachte Beeinflussung kompensiert werden, welche durch die Reibungswärme verursacht wird, und die mechanische Verstimmung des Messschaltkreises vermieden werden, welche durch eventuell beim Einbau auftretende Spannungen verursacht wird.

Im folgenden wird die Erfindung anhand der beiliegenden Zeichnungen erläutert.

Es zeigen:
- Fig. 1: eine bevorzugte Ausführungsform einer erfindungsgemässen Vorrichtung;
- Fig. 2: eine Modifikation der Vorrichtung nach Fig. 1;
- Fig. 3: eine zweite Ausführungsform einer erfindungsgemässen Vorrichtung;
- Fig. 4: eine dritte Ausführungsform einer erfindungsgemässen Vorrichtung;
- Fig. 5: eine Ausführungsform eines erfindungsgemässen Messschaltkreises;
- Fig. 6: eine andere Ausführungsform eines erfindungsgemässen Messschaltkreises und
- Fig. 7: eine Anwendungsform der Vorrichtung in einer Projektilwebmaschine.

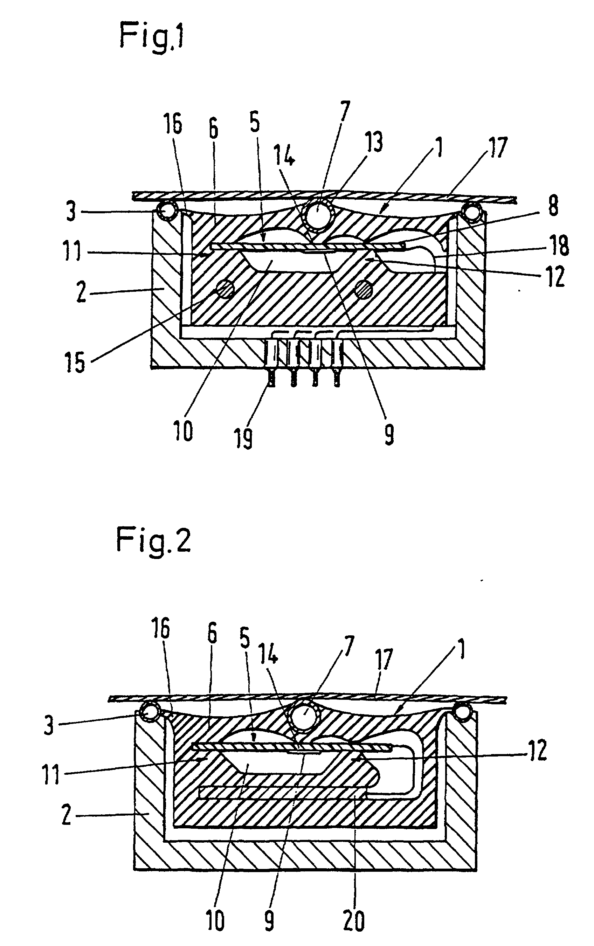

Die Fig. 1 zeigt eine im Schnitt dargestellte, bevorzugte Ausführungsform einer Vorrichtung, die im wesentlichen aus einem Sensor 1, einem rechteckförmigen Gehäuse 2 und zwei Fadenführungselemente 3 besteht. Der Sensor 1 besteht aus einem Signalgeber 5, einem Körper 6 aus elastischem Material z.B. Silikongummi und einem Fadenführungsorgan 7. Der Signalgeber 5 enthält eine biegeelastische Platte 8 und einen Messschaltkreis 9, der auf einer Oberfläche der Platte aufgebracht ist. Im Körper 6 ist eine Ausnehmung 10 ausgebildet, in welcher der Signalgeber 5 elastisch, schwingungsdämpfend und freitragend gelagert ist, wobei ein Abschnitt der Platte 8 im Körper 6 festgelegt ist und ein Festlager 11 bildet und wobei in der Ausnehmung 10 ein Abschnitt ausgebildet ist, auf welchem die Platte 8 aufliegt und ein Loslager 12 bildet. Das Fadenführungsorgan 7 ist rohrförmig und besteht aus Keramik. Das Fadenführungsorgan 7 ist in das elastische Material des Körpers 6 so eingebettet, dass ein Abschnitt 13 der Mantelfläche des Rohres freiliegt und dass zwischen dem Rohr und der Platte 8 des Signalgebers 5 eine Schicht 14 aus elastischem Material vorhanden ist. Der Signalgeber 5 und das Fadenführungsorgan 7 sind im Körper 6 so angeordnet, dass das Fadenführungsorgan 7 auf der dem Messschaltkreis 9 abgewandten Plattenseite liegt. Das Gehäuse 2 ist an einer Seite offen und weist zwei Tragorgane 15 für den Sensor 1 auf. Die Tragorgane 15 durchdringen den Körper 6 des Sensors und sind in den Seitenwänden des Gehäuses 2 gelagert, wobei die Lagerung mit Vorteil ein Fest- bzw. Loslager (nicht dargestellt) umfasst. Der Körper 6 ist im Innenraum des Gehäuses 2 elastisch, schwingungsdämpfend und frei aufgehängt. Um das Eindringen von Schmutz zu verhindern, ist am Körper 6 eine Dichtlippe 16 angeformt, welche an den Innenseiten des Gehäuses 2 anliegt. Die Fadenführungselemente 3 sind an der offenen Seite des Gehäuses 2 in dessen Stirnwänden angeordnet. Die Tragorgane 15 und die Fadenführungselemente 3 sind so einander zugeordnet, dass ein über die Vorrichtung bewegter Faden 17 auf das Fadenführungsorgan 7 stets aufliegt, um ein vertikal auf den Signalgeber 5 gerichtete Krafteinleitung zu erzielen. Die Anschlussdrähte 18 des Messschaltkreises 9 sind über Steckelemente 19 herausgeführt.

Die in Fig. 2 gezeigte Vorrichtung weist eine Schaltungsplatte 20 auf. Diese Schaltungsplatte 20 ist unterhalb der Lageranordnung für den Signalgeber 5 in den Körper 6 aus elastischem Material so eingebettet, dass die signalübertragenden Leitungen zwischen Signalgeber 5 und Schaltungsplatte 20 freiliegen. Die Schaltungsplatte 20 dient gleichzeitig als Tragorgan für den Sensor 1. Hierzu weist die Schaltungsplatte 20 eine Randpartie (nicht gezeigt) auf, welche in der Wand des Gehäuses 2 befestigt ist.

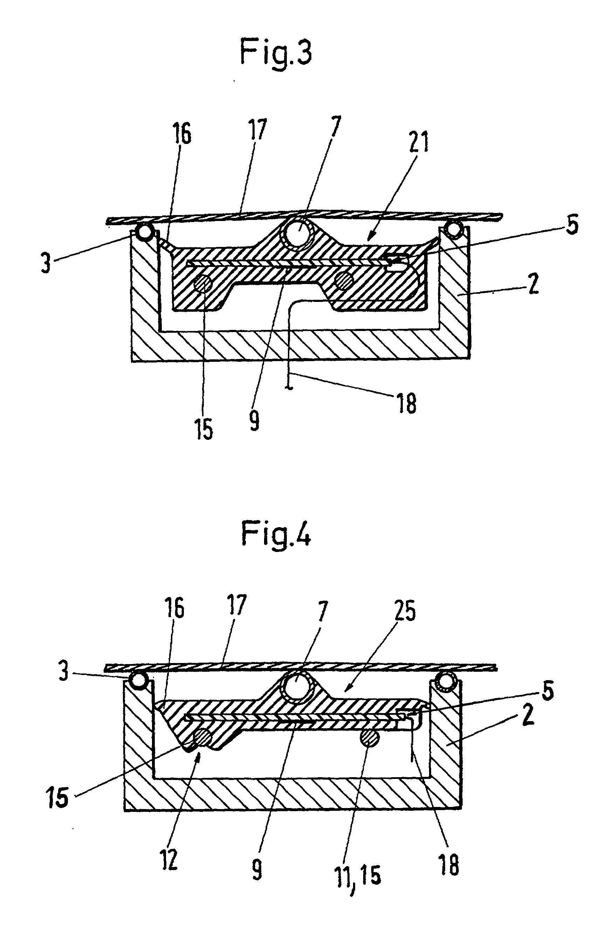

Die Fig. 3 zeigt eine Vorrichtung, die einen Sensor 21 mit einem Signalgeber 5, der nahezu vollständig in den Körper eingebettet ist. Der Sensor 21 ist somit auf den Tragorganen 15 elastisch, schwingungsdämpfend und frei aufgehängt und über die Tragorgane 15 im Gehäuse 2 elastisch, schwingungsdämpfend und freitragend gelagert.

Die Fig. 4 zeigt einen Sensor 25 mit einem Signalgeber 5, der nahezu vollständig in das elastische Material eingebettet und mit einer ein Fest- und ein Loslager aufweisenden Lageranordnung versehen ist. In diesem Fall sind die Tragorgane 15 in den Seitenwänden des Gehäuses 2 befestigt.

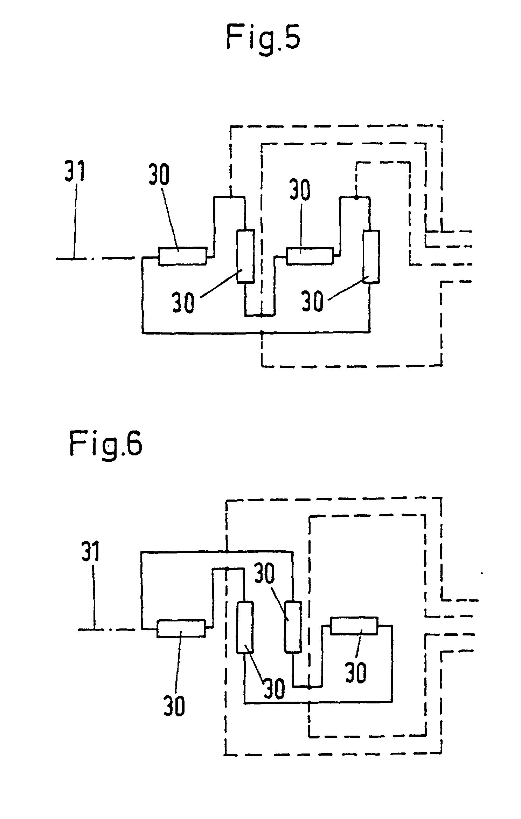

Der Messschaltkreis 9 ist ein Brückenschaltkreis aus Widerstandselementen 30 (Fig. 5, 6). Durch die während des Fadenlaufes am Fadenführungsorgan 7 auftretende Reibung wird das Fadenführungsorgan 7 erwärmt. Ein Teil der Wärme wird über das elastische Material auf den Signalgeber 5 übertragen. Dieser Temperatureinfluss wird bei dem Brückenschaltkreis 9 dadurch ausgeschaltet, dass alle Widerstandspaare der gleichen Temperatur ausgesetzt sind.

Die Figuren 5 und 6 zeigen jeweils eine erfindungsgemässe Anordnung der Widerstandselemente 30. Wie die Figuren 5 und 6 zeigen, sind die Widerstandselemente 30 entlang einer rechtwinklig zur Fadenlaufrichtung verlaufenden Linie 31 symmetrisch auf der Platte 8 aufgebracht und die Widerstandselemente 30 jedes Brückenzweiges sind orthogonal zueinander angeordnet.

Das Fadenführungsorgan 7 und der Signalgeber 5 sind einander so zugeordnet, dass das Fadenführungsorgan 7 entweder in oder seitlich versetzt zu einer senkrecht verlaufenden Ebene angeordnet ist, welche durch die Linie 31 verläuft.

Um den Signalgeber 5 unter Vorspannung zu lagern, wird entweder die Schicht 14 dicker ausgebildet (Fig. 1) oder die Ausnehmung für den Signalgeber 5 in den Körper gekrümmt ausgebildet (Fig. 3).

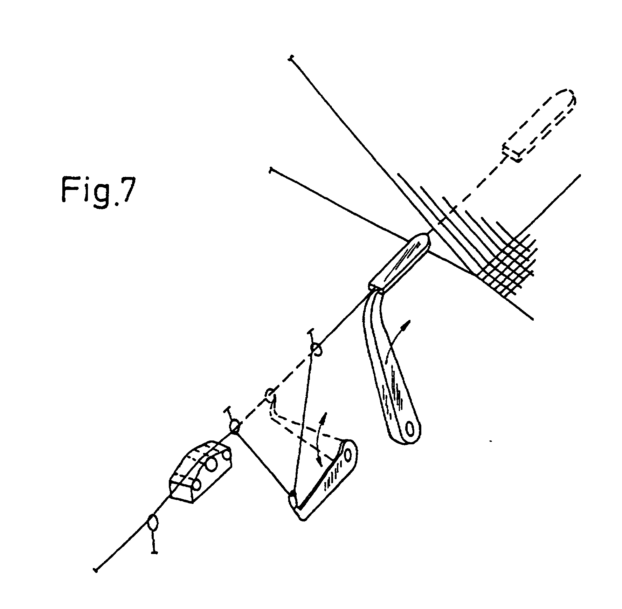

In Fig. 7 ist eine Anwendung der Vorrichtung zum Detektieren der Schussfadenspannung bei einer Projektilwebmaschine schematisch dargestellt. Die Fig. 7 ist selbsterklärend, so dass auf eine detaillierte Beschreibung verzichtet wird.

Es wird darauf hingewiesen, dass der Sensor 1 allein in einer Webmaschine zur Anwendung gelangen kann, wobei auf die elastische, schwingungsdämpfende und freitragende Lagerung und die elastische, schwingungsdämpfende und freie Aufhängung zu achten ist. Selbstredend können der Sensor bzw. die Vorrichtung mit dem Sensor zum Detektieren der Fadenspannung in Greifer- und Luftwebmaschinen und allgemein in Textilmaschinen angewendet werden.

Der Sensor 1 enthält einen Signalgeber 5, ein Fadenführungsorgan 7 und einen Körper 6 aus elastischem Material. Der Signalgeber 5 ist im Körper 6 elastisch, schwingungsdämpfend und freitragend gelagert. Durch diese Lageranordnung wird der Einfluss durch mechanische Einwirkung als auch die durch Wärme verursachte Beeinflussung aufgrund der durch den laufenden Faden verursachten Erwärmung weitgehend aufgehoben und somit Messfehler vermieden.

## Patentansprüche

1. Sensor zum Detektieren des Spannungsverlaufes eines bewegten Fadens, welcher Sensor einen Signalgeber (5), mindestens ein Fadenführungsorgan (7) und ein Körper (6) aus elastischem Material umfasst, wobei der Signalgeber in dem Körper angeordnet ist, **dadurch gekennzeichnet, dass** der Signalgeber (5) in dem Körper (6) freitragend gelagert ist, um eine durch mechanische Einwirkung oder auch durch Wärme verursachte Beeinflussung zu kompensieren und um damit die mechanische und elektrische Verstimmung des Signalgebers zu verhindern.

2. Sensor nach Anspruch 1, **dadurch gekennzeichnet, dass** der Signalgeber (5) eine biegeelastische Platte (8) enthält, die mit einem Festlager (11) und einem Loslager (12) in einer Ausnehmung (10) des Körpers (6) gelagert ist.

3. Sensor nach einem der Ansprüche 1 oder 2, **dadurch gekennzeichnet, dass** der Signalgeber (5) und das Fadenführungsorgan (7) mindestens teilweise in das elastische Material (6) eingebettet sind.

4. Sensor nach einem der Ansprüche 1 oder 2, **dadurch gekennzeichnet, dass** der Signalgeber (5) vollständig in das elastische Material (6) eingebettet ist.

5. Sensor nach einem der Ansprüche 1 bis 3, **dadurch gekennzeichnet, dass** der Signalgeber (5) unter Vorspannung in einer gekrümmt ausgebildeten Ausnehmung (10) des Körpers (6) gelagert ist.

6. Sensor nach einem der Ansprüche 1 bis 3, **dadurch gekennzeichnet, dass** der Signalgeber (5) in einer Ausnehmung (10) des Körpers (6) spannungsfrei gelagert ist.

7. Sensor nach einem der Ansprüche 1 bis 6, **dadurch gekennzeichnet, dass** der Signalgeber (5) aus einer biegeelastischen Platte (8) und einem Messschaltkreis (9) besteht, der auf der Plattenseite ausgebildet ist, die dem Fadenführungsorgan (7) abgewandt ist.

8. Sensor nach Anspruch 7, **dadurch gekennzeichnet, dass** der Messschaltkreis (9) ein Brückenschaltkreis aus Widerstandselementen (30) ist und dass die Widerstandselemente (30) entlang einer rechtwinklig zur Fadenlaufrichtung verlaufende Linie (31) symmetrisch auf der Platte (8) angeordnet sind und dass die Widerstandselemente (30) der Brückenzweige jeweils orthogonal zueinander angeordnet sind.

9. Sensor nach Anspruch 1, **gekennzeichnet durch** eine Lagerung des Signalgebers (5) in einem Körper (6) aus einem elastischen, schwingungsdämpfenden Material

10. Sensor nach Anspruch 1, **gekennzeichnet durch** ein schwingungsdämpfendes Material zwischen Fadenführungsorgan (7) und dem Signalgeber (5).

11. Sensor nach Anspruch 1, **gekennzeichnet durch** ein zwischen dem Fadenführungsorgan (7) und dem Signalgeber (5) Wärme ableitendes Material.

12. Vorrichtung mit einem Sensor (1) nach einem der Ansprüche 1 bis 11, **gekennzeichnet durch** ein Gehäuse (2) mit zwei Tragorganen (15) und eine Lageranordnung (11, 12), um den Signalgeber (5) des Sensors freitragend zu lagern, und **durch** zwei Fadenführungselemente (3), die bezüglich dem Fadenführungsorgan (7) des Sensors (1) so angeordnet sind, dass ein über das Fadenführungsorgan (7) bewegter Faden (17) stets auf dem Fadenführungsorgan (7) aufliegt.

13. Vorrichtung nach Anspruch 12, **dadurch gekennzeichnet, dass** ein einseitig offenes Gehäuse (2) zur Aufnahme des Fadenführungsorgans (7) vorgesehen ist und dass die Fadenführungselemente (3) am Gehäuse (2) angeordnet sind.

14. Webmaschine mit einer Vorrichtung nach Anspruch 12 oder 13, **dadurch gekennzeichnet, dass** die Vorrichtung in der Laufbahn mindestens eines Schussfadens angeordnet ist.

## Claims

1. Sensor for the detection of the stress profile of a moved thread, the sensor comprising a signal transducer (5), at least one thread guiding member (7) and a body (6) of resilient material, with the signal generator being arranged in the body, **characterized in that** the signal generator (5) is mounted in cantilevered manner in the body (6) in order to compensate an influence caused by mechanical action or also by heat and in order to thereby prevent the mechanical and electrical detuning of the signal generator.

2. Sensor in accordance with claim 1, **characterized in that** the signal generator (5) contains a plate elastic in bending which is mounted with a fixed mount (11) and a loose mount (12) in a recess (10) of the body (6).

3. Sensor in accordance with one of the claims 1 or 2, **characterized in that** the signal generator (5) and the thread guiding member (7) are at least partially embedded into the resilient material (6).

4. Sensor in accordance with one of the claims 1 or 2, **characterized in that** the signal generator (5) is fully embedded into the elastic material (6).

5. Sensor in accordance with one of the claims 1 to 3, **characterized in that** the signal generator (5) is mounted under pretension in a curved recess (10) of the body (6).

6. Sensor in accordance with one of the claims 1 to 3, **characterized in that** the signal generator (5) is mounted free of stress in a recess (10) of the body (6).

7. Sensor in accordance with one of the claims 1 to 6, **characterized in that** the signal generator (5) comprises a plate (8) which is elastic in bending and a measurement circuit (9) which is formed on the side of the plate remote from the thread guiding member (7).

8. Sensor in accordance with claim 7, **characterized in that** the measurement circuit (9) is a bridge circuit of resistance elements (30); **in that** the resistance elements (30) are arranged symmetrically on the plate (8) along a line (31) extending perpendicular to the thread running direction; and **in that** the resistance elements (30) of the bridge branches are respectively arranged orthogonal to one another.

9. Sensor in accordance with claim 1, **characterized by** a mounting of the signal transducer (5) in a body (6) of an elastic, vibration damping material.

10. Sensor in accordance with claim 1, **characterized by** a vibration damping material between the thread guiding member (7) and the signal generator (5).

11. Sensor in accordance with claim 1, **characterized by** a heat dissipating material between the thread guiding member (7) and the signal generator (5).

12. Apparatus with a sensor in accordance with one of the claims 1 to 11, **characterized by** a housing (2) having two carrying members (15) and a mounting arrangement (11, 12) in order to mount the sensor (1) in the manner of a cantilever, and by two thread guiding elements (3) which are so arranged relative to the thread guiding member (7) of the sensor (1) that a thread (17) moved over the thread guiding member (7) always lies on the thread guiding member (7).

13. Apparatus in accordance with claim 12, **characterized in that** a housing (2) which is open at one side is provided for receiving the thread guiding member (7) and **in that** the thread guiding elements (3) are arranged on the housing (2).

14. Loom with an apparatus in accordance with claim 12 or claim 13, **characterized in that** the apparatus is arranged in the running path of at least one weft thread.

## Revendications

1. Capteur pour détecter l'allure de tension d'un fil déplacé, ledit capteur comprenant un générateur de signaux (5), au moins un organe de guidage de fil (7) et un corps (6) en matériau élastique, où le générateur de signaux est disposé dans le corps, **caractérisé en ce que** le générateur de signaux (5) est logé dans le corps (6) en porte-à-faux pour compenser un effet mécanique ou bien également un effet provoqué par la chaleur et pour empêcher ainsi un désaccord mécanique et électrique du générateur de signaux.

2. Capteur selon la revendication 1, **caractérisé en ce que** le générateur de⁻ signaux (5) comporte une plaque (8) élastique en flexion qui est logée avec un palier fixe (11) et un palier lâche (12) dans un évidement (10) du corps (6).

3. Capteur selon l'une des revendications 1 ou 2, **caractérisé en ce que** le générateur de signaux (5) et l'organe de guidage de fil (7) sont noyés au moins partiellement dans le matériau élastique (6).

4. Capteur selon l'une des revendications 1 ou 2, **caractérisé en ce que** le générateur de signaux (5) est noyé complètement dans le matériau élastique (6).

5. Capteur selon l'une des revendications 1 à 3, **caractérisé en ce que** le générateur de signaux (5) est logé sous précontrainte dans un évidement (10) réalisé d'une manière courbée du corps (6).

6. Capteur selon l'une des revendications 1 à 3, **caractérisé en ce que** le générateur de signaux (5) est logé sans contraintes dans un évidement (10) du corps (6).

7. Capteur selon l'une des revendications 1 à 6, **caractérisé en ce que** le générateur de signaux (5) est constitué d'une plaque (8) élastique en flexion et d'un circuit de commutation de mesure (9) qui est réalisé sur le côté de la plaque qui est éloigné de l'organe de guidage de fil (7).

8. Capteur selon la revendication 7, **caractérisé en ce que** le circuit de commutation de mesure (9) est un circuit de commutation en pont en éléments de résistance (30), et **en ce que** les éléments de résistance (30) sont disposés le long d'une ligne (31) s'étendant perpendiculairement à la direction du périple du fil, d'une manière symétrique sur la plaque (8), et **en ce que** les éléments de résistance (30) des branchements en pont sont disposés respectivement d'une manière orthogonale les uns aux autres.

9. Capteur selon la revendication 1, **caractérisé par** un logement du générateur de signaux (5) dans un corps (6) en un matériau élastique, amortissant les vibrations.

10. Capteur selon la revendication 1, **caractérisé par** un matériau amortissant les vibrations entre l'organe de guidage de fil (7) et le générateur de signaux (5).

11. Capteur selon la revendication 1, **caractérisé par** un matériau évacuant la chaleur entre l'organe de guidage de fil (7) et le générateur de signaux (5).

12. Dispositif avec un capteur (1) selon l'une des revendications 1 à 11, **caractérisé par** un boîtier (2) avec deux organes de support (15) et un agencement de palier (11, 12) pour loger le générateur de signaux (5) du capteur en porte-à-faux, et par deux éléments de guidage de fil (3) qui sont disposés relativement à l'organe de guidage de fil (7) du capteur (1) de façon qu'un fil (17) déplacé sur l'organe de guidage de fil (7) repose toujours sur l'organe de guidage de fil (7).

13. Dispositif selon la revendication 12, **caractérisé . en ce qu'**il est prévu un boîtier (2) ouvert d'un côté pour la réception de l'organe de guidage de fil (7), et **en ce que** les éléments de guidage de fil (3) sont disposés au boîtier (2).

14. Métier à tisser comportant un dispositif selon la revendication 12 ou 13, **caractérisé en ce que** le dispositif est disposé dans la trajectoire d'au moins un fil de trame.
